# EUROPÄISCHE PATENTSCHRIFT

(11) **EP 0 353 584 B1**
(45) Veröffentlichungstag und Bekanntmachung des Hinweises auf die Patenterteilung: **21.09.1994**
(21) Anmeldenummer: 89113592.3
(22) Anmeldetag: 24.07.1989
(51) Int. Cl.: G05B 19/405

(54) **Werkzeugmaschinen- oder Robotersystem mit einer zyklisch absoluten Lageerfassungseinrichtung**
Machine tool or robot system with an absolute cyclic position measuring device
Système pour machine-outil ou robot avec un dispositif de mesure de position absolue cyclique

(30) Priorität: 05.08.1988 DE 3826732
(43) Veröffentlichungstag der Anmeldung: 07.02.1990
(73) Patentinhaber: SIEMENS AKTIENGESELLSCHAFT, 80333 München (DE)
(72) Erfinder: Götting, Gerd, Dipl.-Ing., D-8522 Herzogenaurach (DE)

(56) Entgegenhaltungen:
- EP-A- 0 049 151
- JP-A-63 158 402

## Beschreibung

Die Erfindung bezieht sich auf ein Werkzeugmaschinen- oder Robotersystem, bei dem am jeweiligen Antrieb jeder Bewegungsachse jeweils eine zyklisch absolute Lageerfassungseinrichtung angeordnet ist und bei dem die Antriebe mit dem Unterbrechen des Signal- und/oder Leistungsflusses in ihrer jeweiligen Position fixiert werden und bei dem die jeweilige Zykluszahl in einem nicht flüchtigen Speicher registrierbar ist. Ein solches System ist aus EP 0 04 9 151 bekannt.

Derartige Systeme bilden wesentliche Komponente einer teil- oder vollautomatischen Fertigungslinie, so daß Unterbrechungen im Betrieb der Werkzeugmaschinen oder Robotersysteme auf das notwendigste Maß beschränkt bleiben müssen. Es erweist sich daher als nachteilig, daß beim Abschalten der Systeme die Lageistwertdaten verloren gehen. Nach dem Wiedereinschalten müssen nämlich erst wieder alle Achsen durch ein Anfahren von Referenzpunkten synchronisiert werden.

Aufgabe der Erfindung ist, eine möglichst einfache Inbetriebnahme nach einem Abschalten des Systems zu ermöglichen.

Die Erfindung geht dabei von der Voraussetzung aus, daß als Achsantriebe Motoren mit eingebauter Haltebremse oder aufgrund ihrer Konstruktion selbsthemmende Aggregate verwendet werden.

Gemäß der Erfindung wird die genannte Aufgabe durch die Merkmale im kennzeichnenden Teil des Anspruchs 1 gelöst. Dadurch, daß dieser Speicher nicht der Steuerung zugeordnet ist, sondern räumlich mit dem Roboter verbunden ist, kann sichergestellt werden, daß beispielsweise dann, wenn Reserveroboter anstelle eines defekten Roboters eingesetzt werden, diese ihre aktuelle Position durch ein sehr kurzes Referenzpunktfahren, das sich nur innerhalb einer Umdrehung der Lageerfassungseinrichtung abspielt, an die Steuerung mitteilen können. Denkbar wäre in diesem Zusammenhang auch, daß dann, wenn nur einzelne Glieder eines Roboters ausgetauscht würden, die jeweils erneuerten Teile ihre zugehörige Lageinformation der Steuerung sofort mitteilen können.

Eine erste Ausbildung der Erfindung ist dadurch gekennzeichnet, daß jeweils nur beim Unterbrechen des Signal- und/oder Leistungsflusses die jeweilige Zykluszahl im Speicher registrierbar ist. Die Anzahl der Schreibvorgänge in den Speicher wird dadurch ganz erheblich reduziert, was insbesondere dann, wenn es sich bei den Speichern um solche mit einer vorgegebenen maximalen Anzahl von Schreibvorgängen handelt, als günstig erweist, weil dann auf einen turnusmäßigen Austausch der Speicher verzichtet werden kann.

Wenn im Speicher zusätzlich zur jeweiligen Zykluszahl die jeweilige Lage innerhalb des jeweils vorliegenden Zyklus registrierbar ist, kann die Genauigkeit der gespeicherten Position nochmals erheblich gesteigert werden. Bei einer Abspeicherung der jeweiligen Lage innerhalb des vorliegenden Zyklus besteht auch die Möglichkeit zu einem Vergleich zwischen dem abgespeicherten und dem jeweils aktuellen Lagewert nach einem Wiedereinschalten. Über ein mittels Software einstellbares Toleranzfenster kann dann ein Signal abgeleitet werden, das die Steuerung bzw. den Bediener nur in diesem Fall und nur in dieser Achse aus Sicherheitsgründen zum Referenzpunktanfahren bzw. zur Neusynchronisierung veranlaßt. Ein Referenzpunktfahren kann für die übrigen Achsen dann ganz vermieden werden.

Als Speicher kann ein EEPROM vorgesehen sein, das als handelsübliches Bauelement zur Verfügung steht.

Insbesondere dann, wenn nur beim Unterbrechen des Leistungsflusses die jeweilige Lage zu registrieren ist, erweist es sich als besonders günstig, daß die Energie für das Einspeichern über eine Kondensatorpufferung bereitgestellt wird. Dabei ist es auch möglich, die Zwischenkreisspannung des Umrichters für die Antriebe auszunutzen.

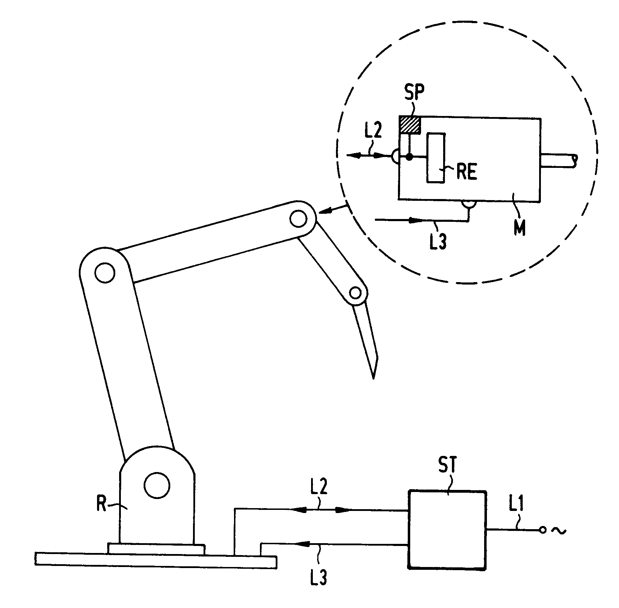

Ein Ausführungsbeispiel der Erfindung ist in der Zeichnung dargestellt und wird im folgenden näher erläutert.

In der Darstellung ist ein mehrachsiger Roboter R gezeigt, dessen Bewegungsablauf über eine Steuerung ST mit Umrichter koordiniert wird. Die Steuerung ST ist dazu über ein Leitungssystem L1 mit einem Versorgungsnetz verbunden und über ein Leitungssystem L2 und L3 werden die Steuerdaten bzw. die Versorgungsenergie dem Roboter R zugeleitet.

Durch eine gestrichelte Linie ist für eine der Achsen des Roboters R der jeweilige Antrieb, in diesem Fall ein Motor M, gezeigt, der mit einem Übersetzungsverhältnis von 1 : 1 einen Resolver als zyklisch absoluten Geber mitführt. Der Resolver RE gibt innerhalb einer Motorumdrehung ein analoges lagespezifisches Signal ab. Die Anzahl der Umdrehungszyklen wird von der Steuerung ST gezählt und ebenso wie das Lagesignal digitalisiert in einem nichtflüchtigen Speicher SP (schraffiert angedeutet) stets dann gespeichert, wenn der Signal- und/ oder Leistungsfluß zum Motor M unterbrochen wird. Dazu kann der Speicher als EEPROM ausgebildet sein. Möglich wäre auch die Verwendung von Speichern, wie diese aus dem Artikel "Ausweis für Werkzeuge", T.Hefter, Report 3/88, S.26 bekannt sind.

Nach dem Wiederherstellen des Signal- und/oder Leistungsflusses werden von der Steuerung ST die Informationen aus den Speichern, u.a. dem Speicher SP, abgefragt und damit liegen die genauen Achspositionen wieder für den Betrieb vor. Falls dabei jedoch die aktuelle absolute Lage innerhalb eines Zyklus von der zuvor gespeicherten Lage um mehr als ein vorgebbares Toleranzfeld abweichen sollte, wird nur für diese Achsen ein Referenzpunktfahren vorgenommen.

## Patentansprüche

1. Werkzeugmaschinen- oder Robotersystem, bei dem am jeweiligen Antrieb jeder Bewegungsachse jeweils eine zyklisch absolute Lageerfassungseinrichtung angeordnet ist, bei dem die Antriebe mit dem Unterbrechen des Signals- und/oder Leistungsflusses in ihrer jeweiligen Position fixiert werden und bei dem die jeweilige Zykluszahl in einem nicht flüchtigen Speicher registrierbar ist, **dadurch ge****kennzeichnet,** daß Speicher (SP) und Antrieb (M) jeweils räumlich miteinander verbunden sind, so daß beim Austausch des Roboters (R) oder von einzelnen Roboterteilen, die jeweils erneuerten Teile ihre zugehörige Lageinformation der Steuerung sofort mitteilen können.

2. Werkzeugmaschinen- oder Robotersystem nach Anspruch 1, **dadurch gekennzeichnet,** daß jeweils nur beim Unterbrechen des Signal- und/oder Leistungsflusses die jeweilige Zykluszahl im Speicher (SP), registrierbar ist.

3. Werkzeugmaschinen- oder Robotersystem nach Anspruch 2, **dadurch gekennzeichnet,** daß die Energie für das Einspeichern über eine Kondensatorpufferung bereitgestellt wird.

4. Werkzeugmaschinen- oder Robotersystem nach Anspruch 3, **dadurch gekennzeichnet,** daß die Energie für das Einspeichern über die Zwischenkreisspannung des Umrichters für die Antriebe bereitgestellt wird.

## Claims

1. Machine tool or robot system, in which, at the respective drive of each axis of movement, there is arranged in each case a cyclically absolute position measuring device, in which system the drives are fixed in their respective position with the interruption of the signal flow and/or power flow, and in which system the respective cycle number can be registered in a non-volatile memory, characterised in that the memory (SP) and the drive (M) are connected in each case spatially to each other, so that when exchanging the robot (R) or individual robot parts, the parts which have been renewed in each case can immediately communicate to the control the associated information relating to their position.

2. Machine tool or robot system according to claim 1, characterised in that the respective cycle number can only be registered in the memory (SP) when the signal flow and/or power flow is interrupted.

3. Machine tool or robot system according to claim 2, characterised in that the energy for storage is made available by way of a capacitor back-up supply.

4. Machine tool or robot system according to claim 3, characterised in that the energy for storage is made available by way of the intermediate circuit voltage of the converter for the drives.

## Revendications

1. Système de machine-outil ou de robot, dans lequel respectivement un dispositif de détection cyclique de position absolue est prévu sur le dispositif d'entraînement de chaque axe de déplacement, et dans lequel les dispositifs d'entraînement sont immobilisés en leur position respective lors de l'interruption du flux du signal et/ou du flux de puissance, et dans lequel le nombre respectif de cycles peut être enregistré dans une mémoire non volatile, caractérisé par le fait qu'une mémoire (SP) et un dispositif d'entraînement (M) sont reliés entre eux dans l'espace de sorte que, lors du remplacement du robot (R) ou de diverses parties du robot, les parties remplacées peuvent communiquer immédiatement l'information de position, qui leur est associée, à l'unité de commande.

2. Système de machine-outil ou de robot suivant la revendication 1, caractérisé par le fait que le nombre respectif de cycles ne peut être enregistré dans la mémoire (SP) que lors de l'interruption du flux du signal et/ou du flux de puissance.

3. Système de machine-outil ou de robot suivant la revendication 2, caractérisé par le fait que l'énergie est mise à disposition pour la mémorisation par l'intermédiaire d'un système tampon à condensateur.

4. Système de machine-outil ou de robot suivant la revendication 3, caractérisé par le fait que l'énergie est mise à disposition pour la mémorisation par l'intermédiaire de la tension du circuit intermédiaire du convertisseur de fréquence pour les dispositifs d'entraînement.
